Europäisches Patentamt

European Patent Office

Office européen des brevets

(19)

(11) Numéro de publication: **0 022 290**

**A1**

(12) # DEMANDE DE BREVET EUROPEEN

(21) Numéro de dépôt: **80200603.1**

(22) Date de dépôt: **25.06.80**

(51) Int. Cl.³: **B 25 J 21/02**
**G 21 F 7/04**

(30) Priorité: **05.07.79 BE 9457**

(43) Date de publication de la demande:
**14.01.81 Bulletin 81/2**

(84) Etats Contractants Désignés:
**DE FR GB IT**

(71) Demandeur: **BELGONUCLEAIRE**
**Rue du Champ de Mars, 25**
**B-1050 Bruxelles(BE)**

(72) Inventeur: **Draulans, Jos**
**Lorzestraat, 52**
**B-2480 Dessel(BE)**

(72) Inventeur: **Dierckx, Ludo**
**Volmolenheide, 16**
**B-2400 Mol(BE)**

(72) Inventeur: **Luyten, Gilbert**
**Chrysantenlaan, 11**
**B-2400 Mol(BE)**

(72) Inventeur: **Vinken, Piet**
**Eikenvelden, 67**
**B-2440 Geel(BE)**

(72) Inventeur: **Theunckens, Albert**
**Sint Barbarastraat, 7**
**B-3980 Tessenderlo(BE)**

(54) **Procédé d'introduction d'objets en boîtes à gants et de leur retrait.**

(57) Procédé et dispositif permettant l'introduction en boîte à gants d'objets et de produits, ainsi que leur retrait suivant la méthode connue par laquelle l'objet est enfermé dans un sac par soudure, lequel sac fait également office de fermeture de la boîte à gants.

A cet effet, une des parois de la boîte à gants 1 et pourvue d'une traversée cylindrique 2 qui contient à sa surface interne plusieurs segments d'étanchéité à lèvres de friction.

Cette traversée est maintenue étanche par une bague 4, ajustée aux dits segments sur laquelle un sac 5 est fixé.

Fig.1

- 1 -

PROCEDE D'INTRODUCTION D'OBJETS EN BOITES A GANTS ET DE LEUR RETRAIT

La présente invention porte sur un procédé et un dispositif permettant l'introduction en boîte à gants d'objets et de produits, ainsi que leur retrait.

Sous la dénomination de "boîte à gants", il y a lieu d'entendre dans la description donnée ci-après, un espace clos dans lequel les manipulations sont opérées de l'extérieur et qui reste également fermé durant l'introduction et le retrait d'objets et de produits.

Selon le procédé généralement appliqué pour l'introduction de produits en boîte à gants ou pour leur retrait, une des parois de la boîte à gants est conçue pour recevoir une bague autour de laquelle est enfilé un sac de plastique qui restera continuellement fermé. Un objet qui doit être retiré de la boîte à gants, est introduit et maintenu dans le sac de plastique qui est alors clos à l'aide de trois soudures situées entre l'objet et la boîte à gants. Le sac est ensuite coupé le long de la soudure du milieu de sorte que l'objet se trouve à l'intérieur d'un sac fermé et que le sac de plastique n'a cessé d'obturer la boîte à gants. Cette opération peut-être répétée à l'aide du même sac, un nombre de fois dépendant de la longueur de ce dernier. Lorsque le sac de plastique devient trop court, un nouveau sac est enfilé sur la bague et sur la partie restante du sac ; cette dernière étant ensuite retirée de l'intérieur et évacuée comme matière contaminée.

Ce procédé qui peut être utilisé tant pour l'introduction que pour le retrait d'objets, requiert cependant une variété de plastique élastique qui peut être serré autour de la bague. De telles variétés de plastique sont cependant peu nombreuses et ont le désavantage de ne pas être stables à des températures de l'ordre de 100°C et de manquer de résistance au percement par des objets à bords tranchants.

Les sacs en chlorure de polyvinyle sont beaucoup utilisés ; cette variété de plastique se décompose cependant à 90°C avec libération d'acide chlorhydrique à action corrosive. D'autres variétés de plastique telles que le polyéthylène se décomposent à des températures encore plus basses.

D'autres matières se prêtant également bien à la soudure, manquent d'élasticité de sorte qu'elles ne peuvent pas être serrées de manière étanche sur la bague. Cette méthode connue a de plus le désavantage de ne pas permettre la mécanisation du procédé.

Il existe également un autre procédé permettant l'introduction d'objets dans une boîte à gants. Selon ce procédé, dans l'une des parois de la boîte à gants est rapportée une traversée cylindrique dont la face interne est pourvue d'une série de segments d'étanchéité à lèvres de friction. Les objets qui doivent toujours avoir le même diamètre que le diamètre intérieur de la traversée, sont alors poussés à travers cette face interne en veillant à ce qu'un objet reste toujours engagé dans la traversée pour assurer l'étanchéité.

Cette méthode est rapide et peut être mécanisée facilement, mais a l'inconvénient que tous les objets doivent toujours avoir le même diamètre et qu'elle ne peut être utilisée pour le retrait d'objets de la boîte à gants.

La présente invention porte sur un nouveau procédé qui supprime les inconvénients des procédés connus.

Selon l'invention, une des parois de la boîte à gants est pourvue d'une traversée cylindrique rapportée munie de segments d'étanchéité à lèvres de friction, et cette traversée est maintenue étanche par une bague-support ajustée aux dimensions des dits segments sur laquelle un sac soudable est fixé de manière étanche.

Il devient possible grâce à ce dispositif d'introduire et de retirer des objets de manière sensiblement analogue à la méthode des sacs plastiques, mais en utilisant des matières non élastiques, plus dures et de bonne soudabilité, telles que par exemple des feuillards métalliques.

Lorsque le sac devient trop petit, un nouvel ensemble sac-bague support est introduit dans la traversée, chassant la bague précédente vers l'intérieur. Elle sera finalement évacuée comme matière contaminée.

L'invention est décrite ci-après en détail à l'aide d'un exemple non limitatif se référant aux figures jointes qui montrent schématiquement :

fig 1. une boîte à gants avec traversée et bague ;
fig 2. une bague avec sac ;
fig 3. une phase du retrait d'un objet ;
fig 4. une phase de l'introduction d'un objet ;
fig 5. une deuxième phase de l'introduction d'un objet ; et
fig 6. l'introduction d'une nouvelle bague.

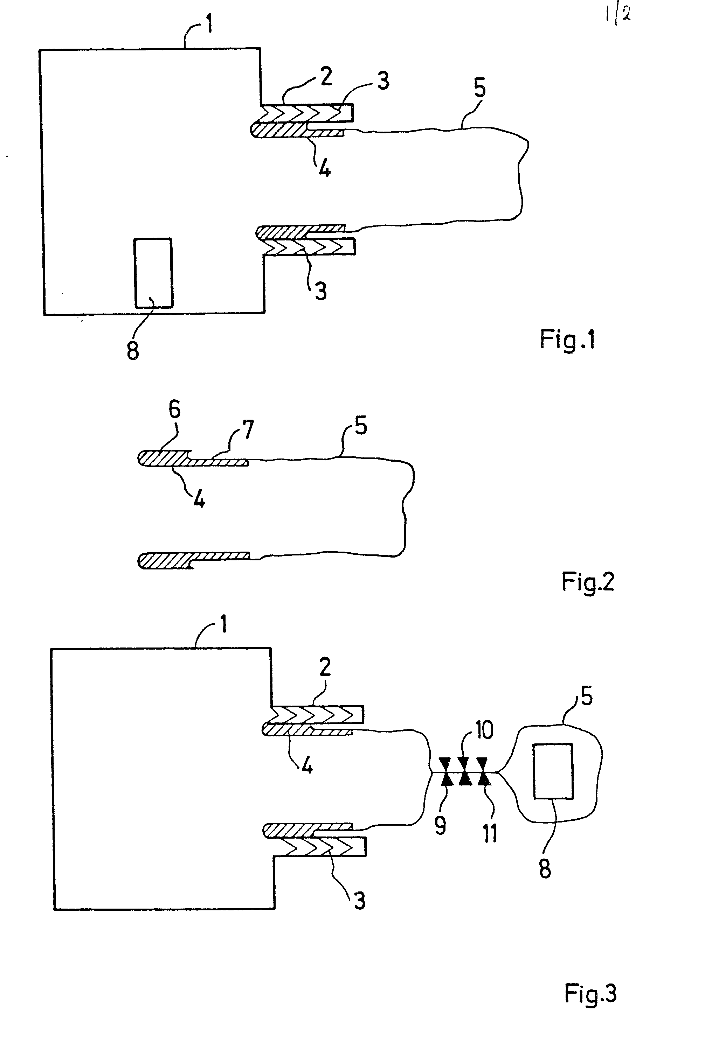

La figure 1, représente une boîte à gants 1, munie d'une traversée 2 dans une de ses parois. La traversée 2 est pourvue sur sa face interne de plusieurs segments d'étanchéité 3 à lèvres de friction. Une bague 4 sur laquelle un sac 5 a été collé (voir figure 2), est poussée dans la traversée. La bague 4 possède une extrémité 6 dont le diamètre extérieur est ajusté au diamètre des segments d'étanchéité 3 et une extrémité dont le diamètre 7 est légèrement inférieur et sur laquelle le sac se trouve collé. L'étanchéité est obtenue par le contact de la partie 6 de la bague 4 avec les segments d'étanchéité 3. Lorsqu'un objet 8 doit être retiré de la boîte à gants, il est introduit dans le sac 5 (figure 3) qui est alors fermé par trois soudures distinctes 9, 10 et 11.

On coupe ensuite au travers de la soudure 10 et l'objet 8 est enfermé dans un sac étanche, cependant que le sac collé sur la bague, reste également fermé.

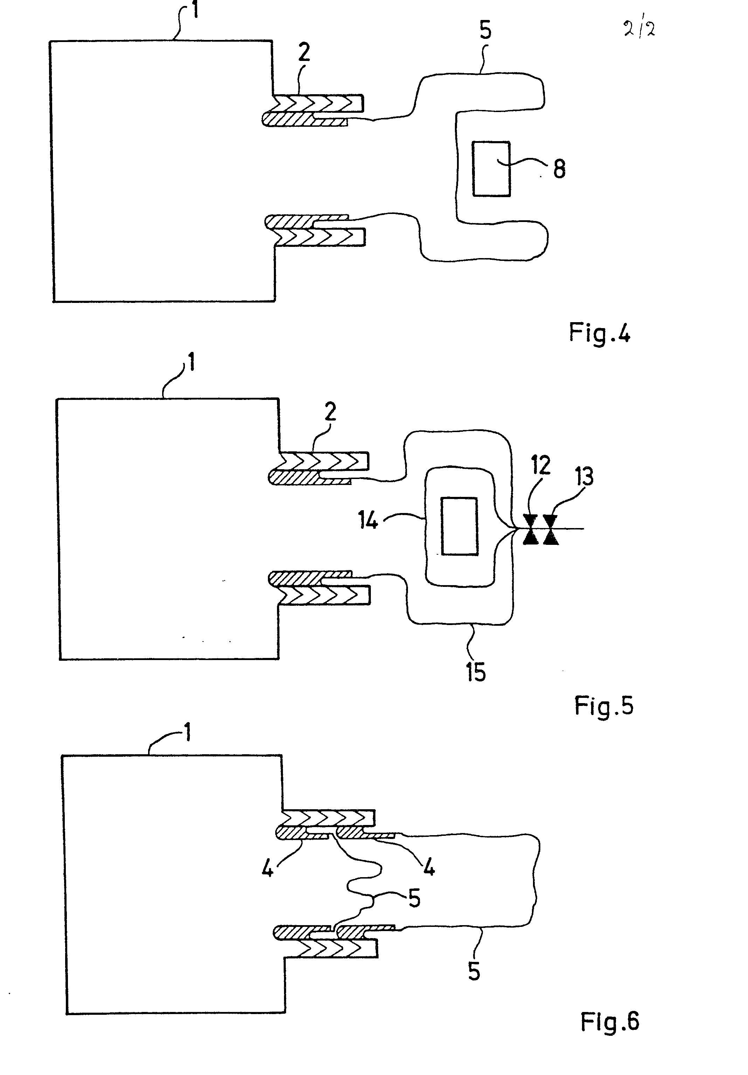

Pour l'introduction de l'objet 8, on le place dans le sac 5 comme montré à la figure 4. Le sac est ensuite soudé deux fois à l'aide des soudures séparées 12 et 13. L'objet est ainsi introduit à l'intérieur de la boîte à gants, enfermé dans une partie 14 du sac, laquelle est ensuite ouverte par coupure, la partie 15 du sac restant fermée.

La figure 6 montre l'introduction d'un nouvel ensemble (bague 4 - sac 5) par laquelle la bague précédente est poussée dans la boîte à gants.

Il est clair que l'invention n'est pas limitée à l'exemple décrit et que de nombreuses variantes tombent dans le domaine de l'invention ; la fixation du sac sur la bague par exemple peut être réalisée par tout mode de fixation dont également l'utilisation de bande adhésive ou de brasure. D'autre part, il est aussi possible de fabriquer la combinaison bague-sac comme un tout et de considérer la bague comme un renforcement du sac.

0022290

REVENDICATIONS

1. Procédé d'introduction d'objets dans une boîte à gants et de leur retrait, suivant la méhode connue par laquelle l'objet est enfermé dans un sac par soudure, lequel sac fait également office de fermeture de la boîte à gants, caractérisé en ce qu'une paroi de la boîte à gants est pourvue d'une traversée cylindrique contenant à sa surface interne plusieurs segments d'étanchéité à lèvres de friction et que cette traversée est maintenue étanche par une bague ajustée aux dits segments sur laquelle un sac est fixé.

2. Procédé selon la revendication 1, caractérisée en ce qu'une nouvelle bague avec sac est poussée dans la traversée, lorsque le sac d'obturation existant devient trop petit pour enfermer d'autres objets par soudage.

3. Procédé selon la revendication 1, caractérisée en ce que le sac est fixé sur la bague par bande adhésive ou par matériau adhésif.

4. Procédé selon la revendication 1, caractérisée en ce que le sac consiste en un feuillard métallique soudable.

Fig.1

Fig.2

Fig.3

Fig.4

Fig.5

Fig.6

Office européen
des brevets

**RAPPORT DE RECHERCHE EUROPEENNE**

Numéro de la demande

EP 80 20 0603

| | **DOCUMENTS CONSIDERES COMME PERTINENTS** | | | CLASSEMENT DE LA DEMANDE (Int Cl ) |
|---|---|---|---|---|
| Catégorie | Citation du document avec indication, en cas de besoin, des parties pertinentes | Revendication concernée | | |
| | FR - A - 2 354 176 (HITACHI CABLE) | 1,2 | | B 25 J 21/02 G 21 F 7/04 |
| | * Revendications 1,10,16; page 8, lignes 5-20 * | | | |
| | -- | | | |
| | FR - A - 2 248 447 (CENTRAL RE- SEARCH LABORATORIES) | 1,2 | | |
| | * Page 6, lignes 8-40; page 7, lignes 1-16 * | | | |
| | -- | | | DOMAINES TECHNIQUES RECHERCHES (Int. Cl. ³) |
| A | PROCEEDINGS OF THE ELEVENTH CON- FERENCE ON HOT LABORATORIES AND EQUIPMENT, 18-21 novembre 1963 Edit.: American Nuclear Society, Hinsdale, Illinois, New York US H.V. RHUDE et L.R. KELMAN: "A simplified procedure for alteration and maintenance of plutonium gloveboxes" | 3 | | B 25 J 21/00 G 21 F 7/00 A 61 M 16/02 |
| | * Page 348, colonne 2, lignes 35-38; figure 1 * | | | |
| | -- | | | |
| A | CH - A - 361 480 (BENECKE) | 4 | | |
| | * Page 1, lignes 62-67 et 33-47 * | | | CATEGORIE DES DOCUMENTS CITES |
| | ---- | | | X: particulièrement pertinent |
| | | | | A: arrière-plan technologique |
| | | | | O: divulgation non-écrite |
| | | | | P: document intercalaire |
| | | | | T: théorie ou principe à la base de l'invention |
| | | | | E: demande faisant interférence |
| | | | | D: document cite dans la demande |
| | | | | L: document cité pour d'autres raisons |
| | | | | &: membre de la même famille, document correspondant |
| | Le présent rapport de recherche a été établi pour toutes les revendications | | | |

| Lieu de la recherche | Date d'achèvement de la recherche | Examinateur |
|---|---|---|
| La Haye | 22-09-1980 | LAMMINEUR |

OEB Form 1503.1 06.78